# EUROPEAN PATENT SPECIFICATION

(11) **EP 1 910 064 B1**
(45) Date of publication and mention of the grant of the patent: **08.07.2009**
(21) Application number: 06800256.7
(22) Date of filing: 24.07.2006
(51) Int. Cl.: B29D 11/00, B29C 45/14, G02B 27/28

(54) **METHOD FOR MAKING POLARIZING BEAM SPLITTERS**
VERFAHREN ZUR HERSTELLUNG VON POLARISATIONSSTRAHLTEILERN
PROCEDE DE FABRICATION DE SEPARATEURS DE FAISCEAU POLARISANTS

(30) Priority: 29.07.2005 US 192681
(43) Date of publication of application: 16.04.2008
(73) Proprietor: 3M Innovative Properties Company, St. Paul MN 55133-3427 (US)
(72) Inventor: DUNCAN, John E., 3M Center, Saint Paul, Minnesota 55133-3427 (US); O'KEEFE, Michael W., 3M Center, Saint Paul, Minnesota 55133-3427 (US); MA, Jiaying, 3M Center, Saint Paul, Minnesota 55133-3427 (US); PARRETT, Rusty A., 3M Center, Saint Paul, Minnesota 55133-3427 (US)
(74) Representative: Vossius & Partner
(86) International application number: PCT/US2006/028584
(87) International publication number: WO 2007/016015

(56) References cited:
- US-A- 5 579 138
- US-B1- 6 396 631
- US-B2- 6 609 795
- US-B2- 6 719 426

## Description

The present disclosure relates to methods of making polarization separation devices, such as those used in image display systems. In particular, the present disclosure relates to methods of making polymeric polarizing beam splitters (PBSs).

Image display systems incorporating PBSs are used to form images on viewing screens, such as projection displays. A typical image display system incorporates an illumination source that is arranged so that light rays from the illumination source reflect off of an imager that contains the desired image to be projected. Some such traditional systems usually fold the light rays such that the light rays from the illumination source and the light rays of the projected image share the same physical space between a PBS and the imager.

The imager of the image display system is typically a polarization-rotating, image-forming device, such as a liquid crystal on silicon (LCoS), which operates by rotating the polarization of the light rays. LCoS imagers are polarization rotating, which means that polarized light rays are either transmitted with their polarizations substantially unmodified for the darkest state or transmitted with their polarizations rotated to provide a desired gray scale. Thus, an input beam comprising polarized light rays is generally used for illuminating an LCoS imager.

### BRIEF SUMMARY OF THE INVENTION

The present disclosure relates to methods of making a PBS. In one implementation, the methods include supporting a polarizing film within a mold, injecting a polymeric material into the mold adjacent a first surface of the polarizing film, solidifying the first polymeric material to form a first prism, and securing a second prism to a second surface of the polarizing film, according to claims 1 and 3.

In another implementation, which is not part of the present invention the methods include injection molding a component of the polarizing beam splitter including a first polymeric material and heat treating the first component up to a temperature that does not exceed about 20°C below a glass transition temperature of the first polymeric material.

### BRIEF DESCRIPTION OF THE DRAWINGS

FIG. 1 is an exploded perspective view of an exemplary PBS made pursuant to the methods of the present disclosure.
FIGS. 2A-2H are schematic illustrations of an injection molding system that may be used in making a PBS pursuant to the methods of the present disclosure.
FIG. 3 is a front perspective view of an exemplary embodiment of a polarizing film in use with a die insert of the injection molding system.
FIGS. 4A-4D are exploded perspective views of additional exemplary embodiment of PBSs constructed according to a method of the present disclosure.

While the above-identified drawing figures set forth several exemplary embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope of the principles of the present disclosure. The figures may not be drawn to scale. Like reference numbers have been used throughout the figures to denote like parts.

### DETAILED DESCRIPTION

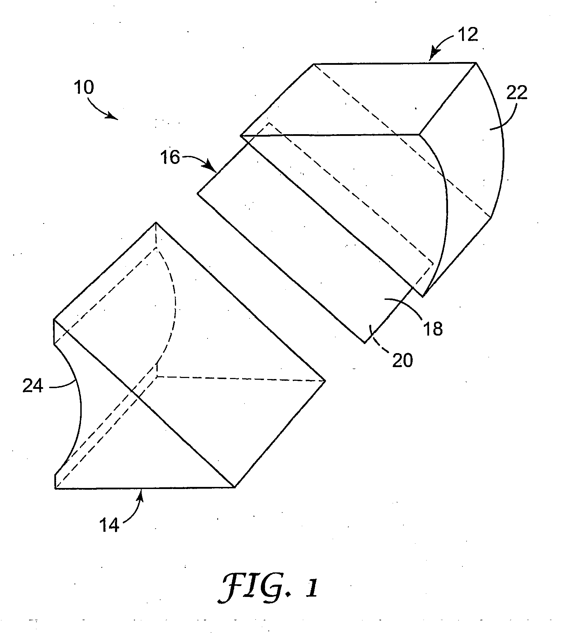

Use of a PBS made according to the methods of the present disclosure offers an attractive design, for example, because it can function to both polarize and fold the light rays. FIG. 1 is an exploded perspective view of PBS 10, which is an exemplary PBS that may be manufactured pursuant to the present disclosure. PBS 10 includes first prism 12, second prism 14, and polarizing film 16. In some exemplary embodiments, first prism 12 and second prism 14 are low-birefringence, polymeric prisms disposed adjacent each other on opposing sides of polarizing film 16.

Polarizing film 16 is typically a polymeric reflective polarizing film and includes first surface 18 and second surface 20. Examples of suitable films for polarizing film 16 are discussed below. Polarizing film 16 splits light transmitted through first prism 12 and second prism 14 into reflected polarization components (s-polarized light) and transmitted polarization components (p-polarized light). As a result, PBS 10 is suitable for polarizing and folding light rays in a variety of image display systems.

Some exemplary methods of the present disclosure for making PBS 10 include injection molding first prism 12 directly against first surface 18 of polarizing film 16. This secures first prism 12 to polarizing film 16. Second prism 14 may then be secured to second surface 20 of polarizing film 16. In one embodiment of the present disclosure, second prism 14 may also be injection molded directly against second surface 20 of polarizing film 16. This secures second prism 14 to polarizing film 16 and first prism 12. Alternatively, second prism 14 may be separately formed, and then secured to second surface 20 of polarizing film 16. In another embodiment of the present disclosure, first surface 18 of polarizing film 16 may be secured to first prism 12 after first prism 12 is molded. Second prism 14 may then be injection molded directly against second surface 20 of polarizing film 16. As discussed below, PBS 10 may also be heat treated to improve (i.e., lower) the birefringence of at least one of the first prism 12 and second prism 14.

As further shown in FIG. 1, the exemplary first prism 12 includes curved outer surface 22, and the exemplary second prism 14 includes curved outer surface 24. Curved outer surfaces 22 and 24 can function as refractive surfaces having optical power in a manner similar to lenses that are integrated into PBS 10 for redirecting light rays that pass through PBS 10. The methods of the present disclosure are particularly suitable for forming first prism 12 and second prism 14 with various surface features desired for a particular application, such as curved surfaces, diffractive features, microlenses, fresnels and combinations thereof. Examples of suitable PBSs having curved outer surfaces, which may be constructed pursuant to the present disclosure, are disclosed in the co-pending and commonly-owned application entitled "Polarizing Beam Splitter" (attorney docket no. 61015US002).

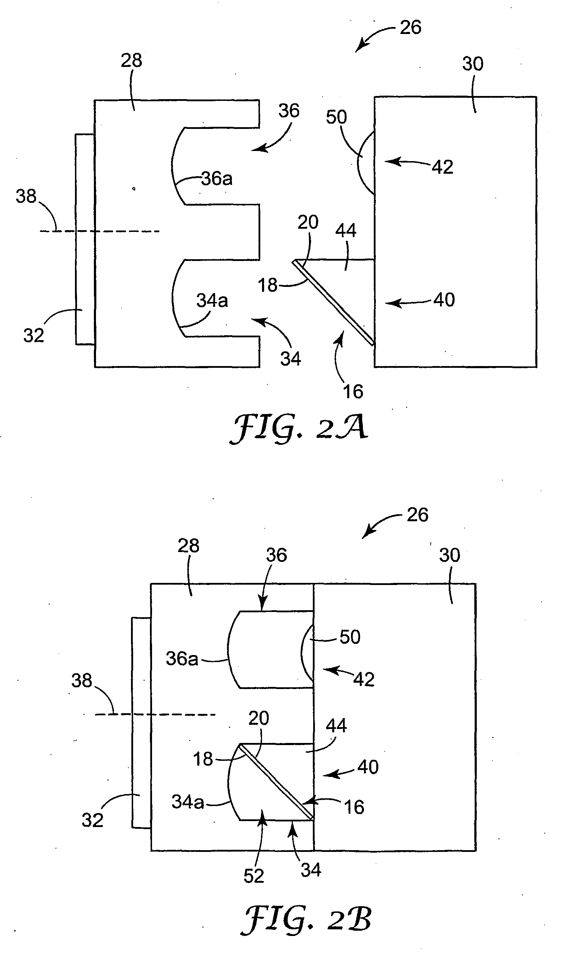

FIGS. 2A-2H are schematic illustrations of injection molding system 26 illustrating its use for making PBS 10 pursuant to an exemplary method of the present disclosure. Injection molding system 26 is a two-shot molding system and is an example of a suitable system for making PBS 10 pursuant to the present disclosure.

As shown in FIG. 2A, an exemplary injection molding system 26 includes left block 28 and right block 30, which are opposing die blocks that may be opened and closed relative to each other. The left and right designations are intended for ease of discussion only and are not intended to be limiting. Left block 28 includes rotary platen 32, first mold 34, and second mold 36. Rotary platen 32 supports left block 28 and allows left block 28 to rotate around axis 38. In this exemplary molding system, first mold 34 and second mold 36 respectively include curved walls 34a and 36a, and are identical molds for building multiple PBSs 10. However, one of or both first mold 34 and second mold 36 may have planar walls (with or without surface features mentioned above), or first mold 34 and second mold 36 may have .walls with different curvatures or different types of curvatures (e.g., concave or convex). Preferably, first mold 34 and second mold 36 are spaced apart at equal distances from axis 38 to allow them to switch respective positions when left block 28 rotates.

Right block 30 includes first mold wall 40, second mold wall 42, die insert 44, first injection line 46 (not shown), and second injection line 48 (not shown). First mold wall 40 is a surface of right block 30 aligned with first mold 34, and second mold wall 42 is a surface of right block 30 aligned with second mold 36. Second mold wall 42 may, in some exemplary embodiments, include curved portion 50, which may be connected to second mold wall 42 or integrally formed with it. Die insert 44 is a mold component that generally has some of the same dimensions as second prism 14 of PBS 10, and is connected to first mold wall 40. Alternatively, die insert 44 may be integrally formed with first mold wall 40. First injection line 46 and second injection line 48 are sprue and runner systems that extend through right block 30 or are otherwise configured for injecting flowable polymeric materials into molds 34 and 36 to form first prism 12 and second prism 14. First injection line 46 and second injection line 48 are connected to external extrusion systems (not shown) for providing the polymeric materials.

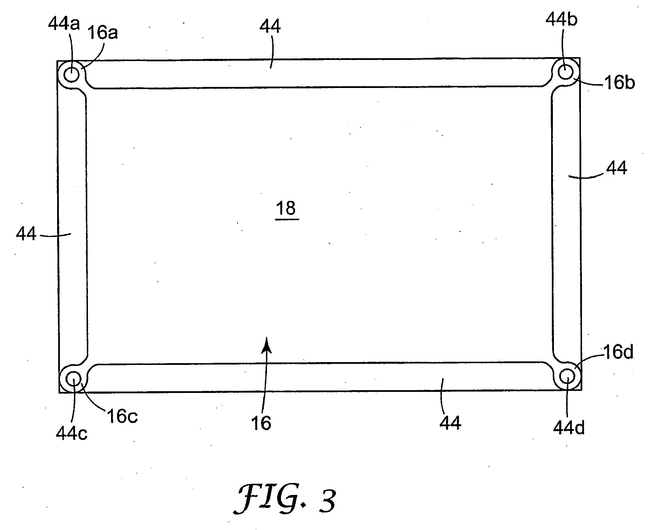

To manufacture PBS 10, polarizing film 16 is initially supported on die insert 44 such that second surface 20 is disposed against die insert 44, and first surface 18 faces first mold 34. Polarizing film 16 may be supported on die insert 44 in a variety of manners, such as friction, adhesion, vacuum (i.e., a vacuum vent in die insert 44), static charge, and with the use of pins or other similar fastening devices, which are inserted through peripheral edges or corners of polarizing film 16, as discussed below in connection with FIG. 3. Polarizing film 16 is also desirably supported on die insert 44 under tension. This increases the planar smoothness of polarizing film 16, which correspondingly preserves the polarization capabilities of polarizing film 16. Once polarizing film 16 is supported on die insert 44, left block 28 closes against right block 30.

FIG. 2B depicts exemplary injection molding system 26 with left block 28 closed against right block 30. As shown, die insert 44 and polarizing film 16 are inserted within first mold 34, and first mold wall 40 seals against first mold 34. The volume defined by polarizing film 16/die insert 44 and the exposed walls of first mold 34 form first cavity 52. First cavity 52 dimensionally defines first prism 12 of PBS 10 and is connected to first injection line 46.

Once left block 28 and right block 30 are closed together, a first polymeric material may then be injected through first injection line 46, and into first cavity 52. Die insert 44 carrying the polarizing film 16 provides only a minimal clearance to the walls of first mold 34, thereby confining the first polymeric material to within first cavity 52. If PBS 10 is the first PBS to be manufactured with injection molding system 26, no material is injected through second injection line 48.

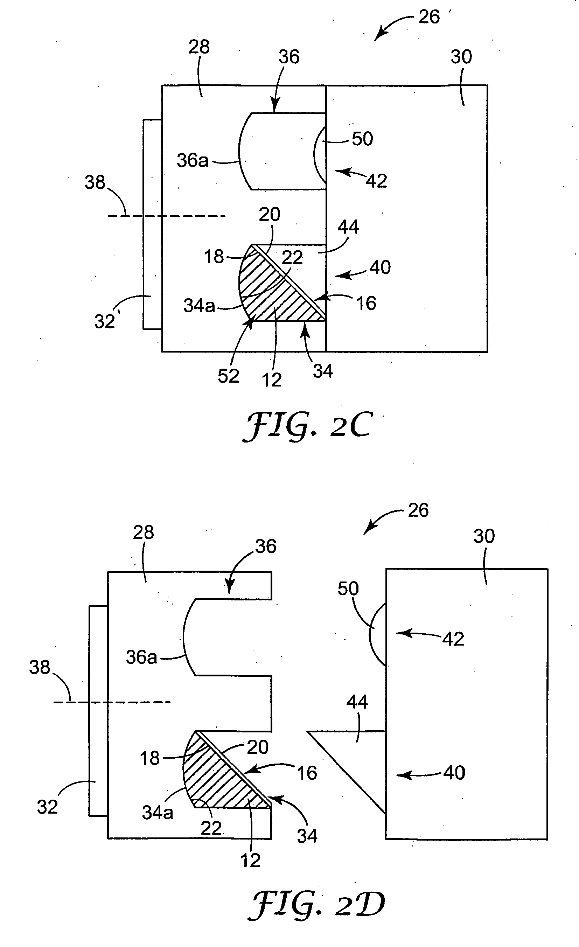

FIG. 2C shows first cavity 52 filled with the first polymeric material. After the injection step, the first polymeric material is solidified to form first prism 12 having the dimensions of first cavity 52. As shown, exemplary first prism 10 includes curved outer surface 22, which is shaped by the curvature of curved wall 34a.

The first polymeric material may be solidified in a variety of manners, and the particular method generally depends on the polymeric material used (e.g., cooling for thermoplastic materials). Examples of suitable polymeric materials for first prism 12 include transparent optical polymers such as acrylic polymers (e.g., polymethylmethacrylates), cyclic-olefin copolymers, polycarbonates, and combinations thereof. Thermoplastic acrylic polymers are desirable because they may be rapidly cooled within first mold cavity 34 via heat transfer conduits within left block 28. Examples of particularly suitable polymeric materials include acrylic polymers commercially available under the trade designation "OPTOREZ OZ-1330" Series polymers from Hitachi Chemical Company, Ltd, Tokyo, Japan. Prior to injection, acrylic polymeric materials are also desirably dried at elevated temperatures (e.g., about 100°C) to reduce the moisture content within the materials. Dry nitrogen gas may be charged to remove ambient air and to keep the acrylic polymeric materials dry.

Solidification of the first polymeric material also typically creates an adhesive connection between first prism 12 and polarizing film 16. This secures polarizing film 16 to first prism 12 while polarizing film 16 is under tension. As a result,

polarizing film 16 remains under tension when adhered to first prism 16, which preserves the planar smoothness of polarizing film 16.

As shown in FIG. 2D, after the first polymeric material solidifies to form first prism 12, left block 28 opens apart from right block 30. This separates first mold wall 40 from first mold 34, which removes die insert 44 from first mold 34. Because polarizing film 16 is securely adhered to first prism 12, polarizing film 16 detaches from die insert 44 and remains secured to first prism 12.

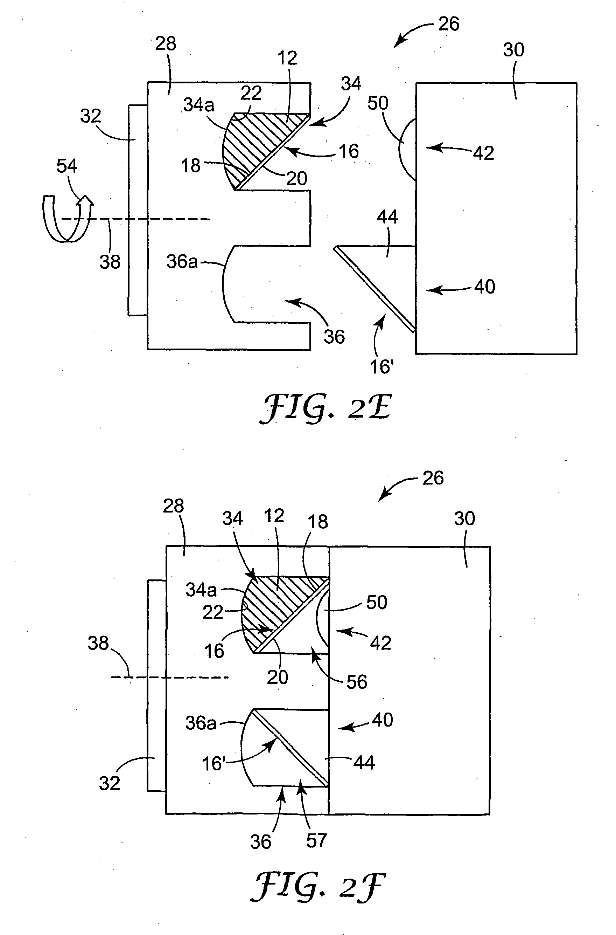

FIG. 2E shows injection molding system 26, where rotary platen 32 and left block 28 are rotated around axis 38 such that first mold 34 and second mold 36 switch locations. After first prism 12 is formed, rotary platen 32 may be manually or automatically rotated, as shown by arrow 54. This aligns first mold 34 with second mold wall 42 and curved portion 50, and aligns second mold 36 with first mold wall 40 and die insert 44. Additionally, a second polarizing film 16' may be supported on die insert 44 to begin making a second PBS 10 (PBS 10') in the same manner as discussed above: The polarizing films (e.g., polarizing films 16 and 16') may be manually or automatically supported on die insert 44. As such, the present disclosure may be performed with injection molding system 26 as a continuous process to manufacture multiple PBSs.

As shown in FIG. 2F, after the rotation step, left block 28 again closes against right block 30. As a result, second mold wall 42 seals against first mold 34, and, if this exemplary system includes the curved portion 50, thereby inserting curved portion 50 within first mold 34. The volume defined by first prism 12/polarizing film 16, the exposed walls of first mold 34, and the curved portion 50 of second mold wall 42 form second cavity 56. Second cavity 56 dimensionally defines second prism 14 of PBS 10 and is connected to second injection line 48.

Similarly, first mold wall 40 seals against second mold 36, thereby inserting die insert 44 within second mold 36. The volume defined by polarizing film 16'/die insert 44 and the exposed walls of first mold 34 form third cavity 57. Third cavity 57 dimensionally defines second prism 12' of PBS 10' in the same manner as discussed above, and is connected to first injection line 46.

A second polymeric material is then injected through second injection line 48, and into second cavity 56. The second polymeric material may or may not be the same as the polymeric material used for first prism 12. However, first prism 12 and second prism 14 are desirably formed from the same polymeric materials to reduce optical variations between first prism 12 and second prism 14. Examples of suitable polymeric materials for second prism 14 include the same transparent polymers discussed above in FIG. 2C for first prism 12. The first and second polymeric materials can be the same or different materials. Additionally, while the second polymeric material is being injected into second cavity 34, the first polymeric material is injected through first injection line 46, and into third cavity 57 to form first prism 12'.

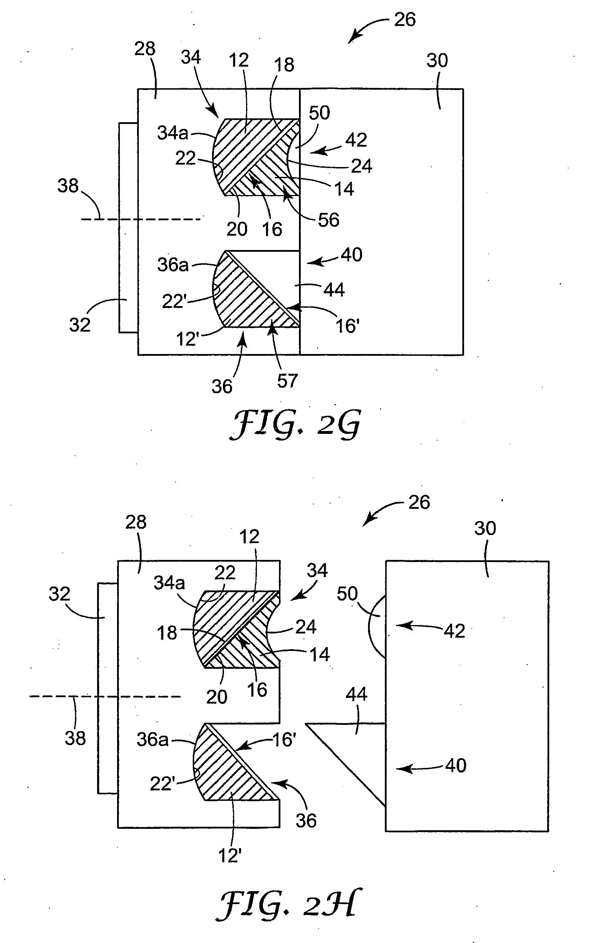

FIG. 2G shows second cavity 56 filled with the second polymeric material and third cavity 57 filled with the first polymeric material. After the injections, the second polymeric material solidifies within second cavity 56 to form second prism 14 having the dimensions of second cavity 56. This includes curved outer surface 24 of second prism 14, which is shaped by the curvature of curved portion 50. Solidification of the second polymeric material also typically creates an adhesive connection between second prism 12 and second surface 20 of polarizing film 16. This secures polarizing film 16 to second prism 12 while polarizing film 16 remains under tension. As a result, polarizing film 16 is secured between first prism 12 and second prism 14. Similarly, the first polymeric material solidifies within third cavity 57 to form first prism 12' in the same manner as discussed above for first prism 12. As a result, first prism 12' includes curved outer surface 22', which is shaped by the curvature of curved wall 36a of this exemplary system.

As shown in FIG. 2H, once second prism 14 and first prism 12' are formed, left block 28 opens again from right block 30. This separates second mold wall 42 from first mold 34, which removes curved portion 50 from first mold 34. PBS 10 may then be ejected from first mold 34, and may undergo subsequent post-molding steps, as discussed below. The opening of left block 28 and right block 30 also separates first mold wall 40 from second mold 36, which removes die insert 44 from second mold 34. Polarizing film 16' detaches from die insert 44 and remains secured to first prism 12', as discussed above. Left block 28 may then be rotated again and the above-described method may be repeated to continuously manufacture PBSs pursuant to the present disclosure:

While injection molding system 26 is described above as a system for making the exemplary PBS 10, injection molding system 26 may also be used to make PBSs with a variety of dimensions, curvatures and general configurations (e.g., configurations other than prismatic). For example, the first and second molds may be dimensionally modified. Alternatively, interchangeable mold inserts may be used to provide a variety of surface features to the first and second prisms. Accordingly, the present disclosure may be used to manufacture PBSs for a wide range of applications.

FIG. 3 is a front perspective view of an exemplary embodiment of polarizing film 16 supported against die insert 44 of right block 30. As shown, die insert 44 includes pins 44a-44d, which are respectively inserted through tabs 16a-16d of polarizing film 16. Polarizing film 16 may be precut with tabs 16a-16d, and then stretched (or tensioned) over die insert 44 to insert pins 44a-44d through tabs 16a-16d. This arrangement allows polarizing film 16 to be supported by die insert 44 under tension, which increases the planar smoothness of polarizing film 16, thereby preserving the polarization capabilities of polarizing film 16. This arrangement also allows polarizing film 16 to be removed from die insert 44 (and remain adhered to first prism 12) when left block 28 opens from right block 30.

Examples of reflective polarizing films suitable for use as polarizing film 16 in the embodiments of the present disclosure include reflective polarizing films, such as birefringent, polymer films, e.g., multi-layer optical films (MOF) manufactured by 3M Corporation, St. Paul, MN, such as those described in Jonza et al., U.S. Patent No. 5,882,774; Weber et al., U.S. Patent No. 6,609,795; and Magarill et al., U.S. Patent No. 6,719,426. Suitable reflective polarizing films for polarizing film 16 also include polymeric reflective polarizing films that include multiple layers of different polymeric materials. For example, polarizing film 16 may include a first layer and a second layer, where the polymeric materials of the first and second layer are different and at least one of the first and second layers being birefringent. In one embodiment of the present disclosure, polarizing film 16 may include a multi-layer stack of first and second alternating layers of different polymer materials, as disclosed in Weber et al., U.S. Patent No. 6,609,795. In another embodiment of the present disclosure, multiple reflective polarizing films may be used.

Suitable reflective polarizing films are typically characterized by a large refractive index difference between first and second polymeric materials along a first direction in the plane of the film and a small refractive index difference between first and second polymeric materials along a second direction in the plane of the film, orthogonal to the first direction. In some exemplary embodiments, reflective polarizing films are also characterized by a small refractive index difference between the first and second polymeric materials along the thickness direction of the film (e.g., between the first and second layers of different polymeric materials). Examples of suitable refractive index differences between the first and second polymeric materials in the stretched direction (i.e., x-direction) range from about 0.15 to about 0.20. The refractive indices in the non-stretched directions (i.e., the y-direction and the z-direction) are desirably within about 5% of one another for a given material or layer, and within about 5% of the corresponding non-stretched directions of a different material or an adjacent layer.

The polymeric materials selected for the layers of an exemplary multilayer reflective polarizing film 16 may include materials that exhibit low levels of light absorption. For example, polyethylene terephthalate (PET) exhibits an absorption coefficient of less than 1.0x10⁻⁵ centimeter⁻¹. Accordingly, for reflective polarizer film 34 that includes PET and has a thickness of about 125 micrometers, the calculated absorption is about 0.000023%, which is about 1/200,000 of an absorption of a comparable wire-grid polarizer.

Low absorptions are desirable because polarizers used in PBSs are exposed to very high light density, which can lead to the failure of the polarizers. For example, absorptive-type polarizer films absorb all the light with unwanted polarization. This generates significant heat. Substrates with high thermal conductivity, such as sapphire, are therefore needed to conduct the heat away from the polarizer films. Moreover, the substrates are exposed to high heat loads, which correspondingly generate thermal birefringence in the substrates. Thermal birefringence in the substrates degrades the contrast and contrast uniformity of the optical system, such as an image display system. As a result, only few materials can be qualified for the substrates with traditional PBSs (e.g., sapphire, quartz, leads content glass, and ceramics).

Similarly, wire-grid polarizers, which use thin metal stripes (e.g., aluminum stripes) coated on transparent substrates, absorb small portions of the received light. This also generates heat in the substrates. For example, 5-10% of the light is absorbed by aluminum stripes in the same manner as an aluminum mirror surface. Since the performance of the wire-grid polarizer is sensitive to the geometric stability of the metal stripes, a small change in the substrates due to thermal expansion can degrade the polarizer's performance.

In contrast, the use of polymeric materials with low absorption coefficients (e.g., PET) allows reflective polarizer film 16 to be used without the need of high-thermal conductivity substrates to conduct heat way from reflective polarizer film 16. As such, polarizing film 16 may be used for extended periods of time with first prism 12 and second prism 14.

Another advantage of using polymeric prisms (i.e., first prism 12 and second prism 14) with the above-discussed reflective polarizing films is that both can be made of polymeric materials. This allows for easier bonding and optical coupling between the prisms and the reflective polarizing films.

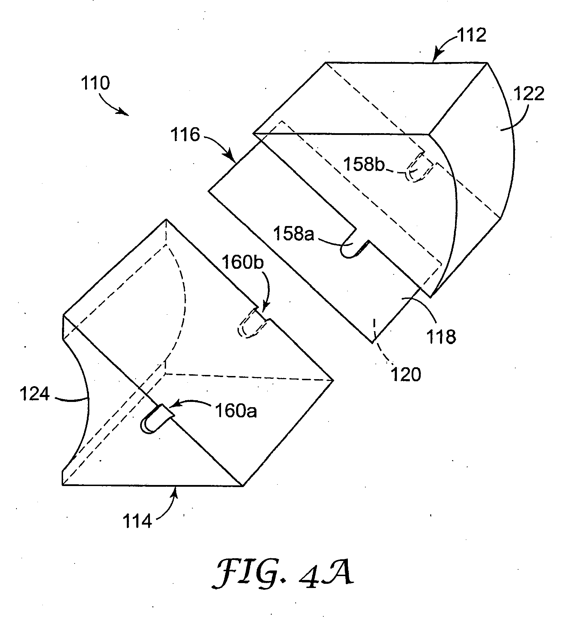

FIGS. 4A-4D are exploded perspective views of exemplary PBSs 110, 210, 310, and 410, which depict exemplary engagement mechanisms for securing a first prism to a second prism. PBS's 110, 210, 310, and 410 have general configurations similar to the PBS 10, where the respective reference labels are increased by 100, 200, 300, and 400. The engagement mechanisms are further discussed in the co-pending and commonly-owned application entitled "Polarizing Beam Splitter" (attorney docket no. 61015US002). The engagement mechanisms are also suitable for retaining the polarizing films in place, thereby holding the polarizing film's position and orientation, with respect to each prism, in place during assembly. The components of the PBSs 110, 210, 310, and 410 are heat treated, as discussed in more detail elsewhere in the specification.

As shown in FIG. 4A, first prism 112 of PBS 110 further includes one or more projections, such one or more male members 158a and 158b, which extend from first prism 112. Similarly, second prism 114 includes one or more female portions 160a and 160b disposed in second prism 114, each capable of receiving one of the male members 158a and 158b therein. While PBS 114 is shown with male members 158a and 158b extending from the first prism 112 and with the female portions 160a and 160b disposed in the second prism 114, an opposite orientation may alternatively be used. In this alternative design, male members 158a and 158b extend from the second prism 114 and female portions 160a and 160b are disposed in the first prism 112. In another alterative design, first prism 112 may include a first male member and a first female portion that correspond to a second male member and a second female portion of second prism 114.

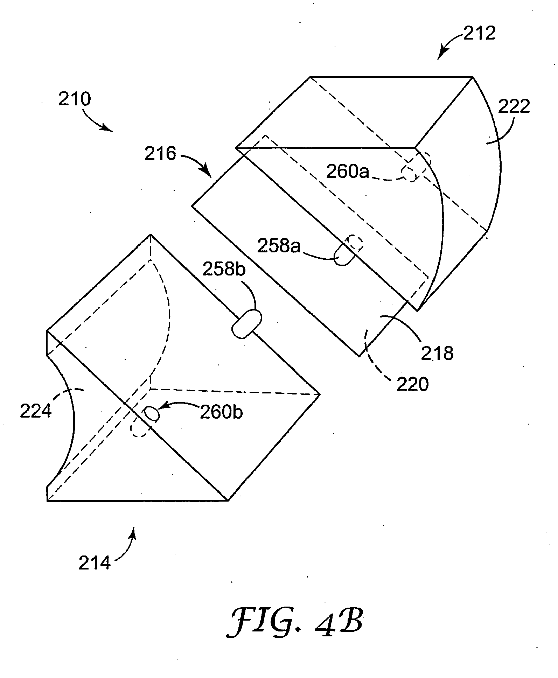

FIG. 4B depicts PBS 210, which is similar to PBS 110 and includes first prism 212 and second prism 214, where first prism 212 includes male member 258a and female portion 260a, and second prism 214 includes male member 258b and female portion 260b. Male members 258a and 258b of this exemplary embodiment are pegs that project from the surfaces adjacent to the reflective polarizing film. Similarly, female portions 260a and 260b are disposed in the surfaces adjacent to the reflective polarizing film, and are configured as depressions or slots formed therein.

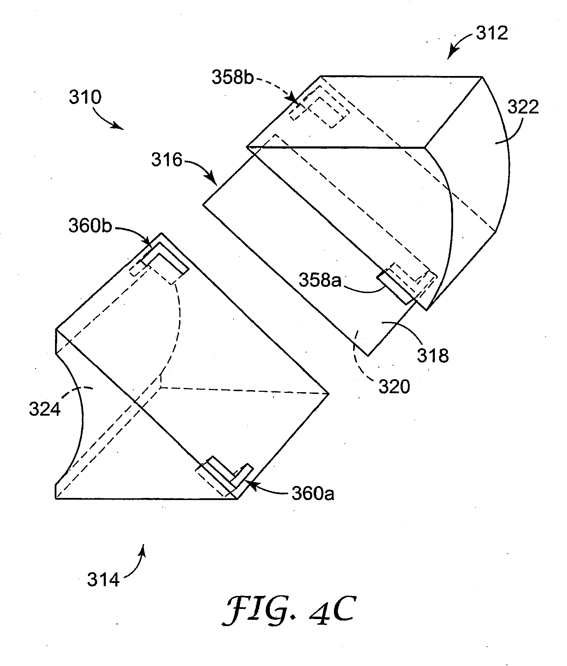

FIG. 4C depicts PBS 310, which is also similar to PBS 110 and includes first prism 312 and second prism 314, where first prism 312 includes male members 358a and 358b, and second prism 314 includes female portions 360a and 360b. Male members 358a and 358b are "L"-shaped members disposed on the surface of first prism 312 that is adjacent to the reflective polarizing film, and project therefrom. Similarly, female portions 360a and 360b are "L"-shaped depressions disposed in the surface of second prism 314 that is adjacent to the reflective polarizing film.

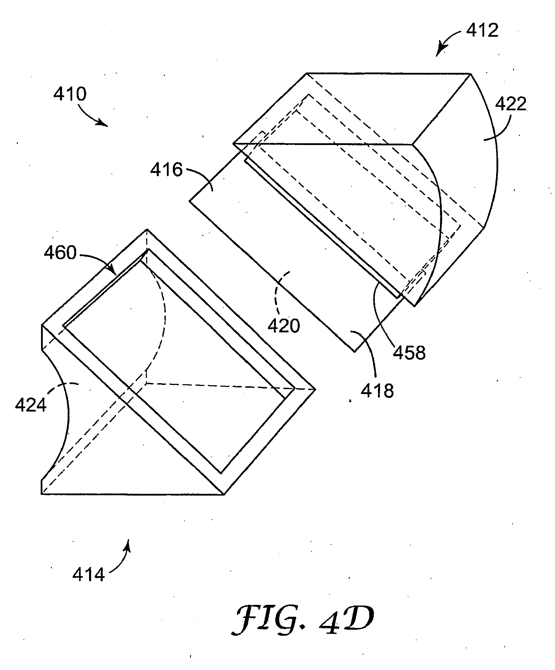

FIG. 4D depicts PBS 410, which is also similar to PBS 110 and includes first prism 412 and second prism 414, where first prism 412 includes male member 458, and second prism 414 includes female portion 460. Male member 458 is a rectangular surface that encompasses the majority of the surface of first prism 412 adjacent to the reflective polarizing film, and which projects therefrom. Similarly, female portion 460 is a rectangular depression that is disposed within the majority of the surface of second prism 414 adjacent to the reflective polarizing film.

The male members and female portions illustrated in FIGS. 4A-4D may be substituted with other engagement mechanisms such that one prism includes at least one male member that is configured to engage with a respective female portion located in the opposing prism. As discussed above, while the male members and female portions are shown in use with PBSs 110 - 410, the alternative engagement mechanisms are suitable for any PBS of the present disclosure. Those of ordinary skill in the art will also readily appreciate that different numbers of the male members and the female portions than those exemplified herein may be used in accordance with the present disclosure. For example, an exemplary PBS may include three or more male members received within three or more female portions.

The male members and the female portions discussed above may be molded with the respective first and second prisms. The first and second prisms may then be secured together with the assistance of the male members and the female portions to form PBSs (e.g., PBSs 110, 210, 310, and 410). This technique may involve placing the reflective polarizing film between the first prism and the second prism. The first prism may then be oriented relative to the second prism such that the male members are aligned with the corresponding female portions. This alignment is beneficial for ensuring that the first prism is accurately positioned relative to the second prism. The first prism may then engage second prism by concurrently inserting male members into the corresponding female portions. This compresses the reflective polarizing film between the incident surfaces of the first prism and the second prism to provide a smooth, planar interface. The male members may be secured to the corresponding female portions with an adhesive. Additionally, the first prism may be secured to the second prism by fitting and/or welding the male members to the corresponding female portions (e.g., ultrasonic, infrared, heat staking, snap fits, press fits, and chemical welding).

Alternatively, the male members and the female portions may be formed with the first and second prisms during the two-shot molding method, discussed above in FIGS. 2A-2H. The following discussion is directed to PBS 110 illustrated in FIG. 4A, but equally applies to any of the above-discussed engagement mechanisms. The male members 158a and 158b may be molded with first prism 112 by machining die insert 44 with grooves that dimensionally define the female portions 160a and 160b of second prism 114. When the first polymeric material is injected into enclosed first cavity 52, portions of the first polymeric material flow into the grooves of die insert 44 and solidify with the rest of first prism 112 to form male members 158a and 158b. Female portions 160a and 160b are then formed when the second polymeric material is injected into second cavity 56. The second polymeric material flows around male members 158a and 158b when injected, and solidifies around male members 158a and 158b with the rest of second prism 114 to form female portions 160a and 160b.

If the first polymeric material and the second polymeric material exhibit similar glass transition temperatures (e.g., if the first polymeric material and the second polymeric material are the same materials), then in some exemplary embodiments the high temperature of the second polymeric material may cause portions of male members 158a and 158b to melt and flow with the second polymeric material. Therefore, when the second polymeric material solidifies, male members 158a and 158b are fused to second prism 114 at the locations of female portions 160a and 160b. This physically secures first prism 112 to second prism 114, with polarizing film 116 disposed therebetween.

In an alternative design, male members 158a and 158b may extend from second prism 114 and female portions 160a and 160b are disposed in first prism 112. This may be performed by forming die insert 44 with extensions that dimensionally define male members 158a and 158b. When the first polymeric material is injected into first cavity 52, the first polymeric material flows around the extensions of die insert 44, and solidifies to form female portions 160a and 160b in first prism 112. Male members 158a and 158b are then formed when the second polymeric material is injected into second cavity 56. Portions of the second polymeric material flow into female portions 160a and 160b, and solidify with the rest of prism 114 to form male members 158a and 158b. Male members 158a and 158b may also fuse into female portions 160a and 160b in this arrangement as well.

After molding according to the processes described above or another suitable process, the first prism, the second prism or the entire PBS 10 may also undergo post-molding processes, such as heat treatments, polishing, machining, and combinations thereof. In one embodiment of the present disclosure, the first prism, the second prism or the entire PBS 10 may undergo a heat treatment process to improve (i.e., lower) the birefringence of the constituent first polymer, second polymer or both. An exemplary heat treatment processes include exposing the first prism, the second prism or the entire PBS 10 to a temperature that ramps up from about room temperature to a maximum temperature about 20°C below the glass transition temperatures of the first polymeric material and the second polymeric material. If the first polymeric material and the second polymeric material are different materials, then the maximum temperature is desirably about 20°C below the lower glass transition temperature between the first polymeric material and the second polymeric material. The temperature is desirably ramped up over about a one hour period.

The maximum temperature is then maintained for a time period ranging from about one hour to about 24 hours, depending on the polymeric materials used and the size of PBS 10. After the maintaining period expires, the temperature is then ramped down to about room temperature at a rate ranging from about 3°C/hour to about 7°C/hour. The heat treating relaxes the molecules in first prism 12 and second prism 14, which correspondingly lowers the structural stress of first prism 12 and/or second prism 14. The reduction in stress can decrease the birefringence in each of first prism 12 and second prism 14, if both prisms are heat treated, which thereby increases the contrast in images projected with PBS 10.

For acrylic polymers, such as polymethylmethacylates, suitable heat treatment conditions include ramping up the temperature from about room temperature to the maximum temperature over about a one hour period. Examples of suitable maximum temperatures range from about 60°C to about 95°C, with particularly suitable maximum temperatures ranging from about 80°C to about 90°C. The maximum temperature is then held for a time period ranging from about two hours to about ten hours. Finally, the temperature is then ramped down from the maximum temperature to about room temperature at a rate of about 5°C/hour.

Maintaining the maximum temperature about 20°C below the glass transition temperatures of the polymeric materials prevents distortions in the surface features of first prism 12 and second prism 14. For example, heat treating PBS 10 at the glass transition temperature of the polymeric materials would distort the curvatures of curved outer surfaces 22 and 24. This would consequently reduce the desired optical qualities of PBS 10. However, the heat treating process of the present disclosure substantially prevents the distortion of first prism 12 and second prism 14, while also improving the corresponding birefringence. This provides PBSs with prisms that exhibit low birefringence and quality surface features for use in imaging devices.

To further improve the performance of PBS 10 according to another embodiment of the present disclosure, the first prism 12 is molded as described above or by another suitable molding method, optionally heat treated as described above, and then the prism surface configured to receive the polarizing film 16 can be machined and, optionally, polished, to a desired degree of flatness. The same or similar process can be repeated with the second prism 14, before assembling the PBS 10 with the polarizing film 12 adhered or otherwise secured therebetween.

Although the present disclosure has been described with reference to preferred embodiments, workers, skilled in the art will recognize that changes may be made in form and detail without departing from the scope of the disclosure.

## Claims

1. A method of making a polarizing beam splitter, the method comprising:
supporting a polarizing film (16) within a mold, the polarizing film having a first surface (18) and a second surface (20);
injecting a polymeric material into the mold adjacent the first surface of the polarizing film;
solidifying the first polymeric material to form a first prism; and securing a second prism to the second surface of the polarizing film.

2. The method of claim 1, further comprising heat treating the polarizing beam splitter up to a temperature that does not exceed about 20°C below a glass transition temperature of the polymeric material.

3. A method of making a polarizing beam splitter, the method comprising:
supporting a polarizing film (16) within a first mold, the polarizing film having a first surface (18) and a second surface (20);
injecting a first polymeric material into the first mold adjacent the first surface of the polarizing film;
solidifying the first polymeric material to form a first prism;
injecting a second polymeric material into a second mold adjacent the second surface of the polarizing film; and
solidifying the second polymeric material to form a second prism, wherein the polarizing film is disposed between the first prism and the second prism.

4. The method of claim 3, further comprising heat treating the polarizing beam splitter up to a temperature that does not exceed about 20°C below a glass transition temperature of the first polymeric material or a glass transition temperature of the second polymeric material.

5. The method of claims 1 or 3 wherein the first prism comprises at least one male member disposed on a surface adjacent to the polarizing film and projecting therefrom, and wherein the second prism comprises at least one female portion capable of receiving the at least one male member therein.

## Patentansprüche

1. Verfahren zur Herstellung von Polarisationsstrahlteilern, mit:
Stützen einer Polarisationsfolie (16) in einer Form, wobei die Polarisationsfolie eine erste Fläche (18) und eine zweite Fläche (20) aufweist;
Einspritzen eines polymeren Materials in die Form neben der ersten Fläche der Polarisationsfolie;
Erstarren des ersten polymeren Materials zu einem ersten Prisma; und
Sichern eines zweiten Prismas an der zweiten Fläche der Polarisationsfolie.

2. Verfahren nach Anspruch 1, ferner aufweisend eine Wärmebehandlung des Polarisationsstrahlteilers bis zu einer Temperatur, die ungefähr 20°C unterhalb einer Glasübergangstemperatur des polymeren Materials nicht übersteigt.

3. Verfahren zur Herstellung von Polarisationsstrahlteilern, mit:
Stützen einer Polarisationsfolie (16) in einer ersten Form, wobei die Polarisationsfolie eine erste Fläche (18) und eine zweite Fläche (20) aufweist;
Einspritzen eines ersten polymeren Materials in die erste Form neben der ersten Fläche der Polarisationsfolie;
Erstarren des ersten polymeren Materials zu einem ersten Prisma;
Einspritzen eines zweiten polymeren Materials in die zweite Form neben der zweiten Fläche der Polarisationsfolie; und
Erstarren des zweiten polymeren Materials zu einem zweiten Prisma, wobei
die Polarisationsfolie zwischen dem ersten Prisma und dem zweiten Prisma liegt.

4. Verfahren nach Anspruch 3, ferner aufweisend eine Wärmebehandlung des Polarisationsstrahlteilers bis zu einer Temperatur, die ungefähr 20°C unterhalb einer Glasübergangstemperatur des ersten polymeren Materials oder einer Glasübergangstemperatur des zweiten polymeren Materials nicht übersteigt.

5. Verfahren nach Anspruch 1 oder 3, wobei das erste Prisma mindestens ein Steckelement aufweist, das auf einer Fläche neben der Polarisationsfolie angeordnet ist und davon hervorsteht, und wobei das zweite Prisma mindestens ein Aufnahmestück aufweist, das das mindestens eine Steckelement in sich aufnehmen kann.

## Revendications

1. Procédé de fabrication d'un séparateur de faisceau polarisant, le procédé comprenant :
le maintien d'un film polarisant (16) à l'intérieur d'un moule, le film polarisant ayant une première surface (18) et une seconde surface (20) ;
l'injection d'un matériau polymère dans le moule au voisinage de la première surface du film polarisant ;
la solidification du premier matériau polymère pour former un premier prisme ; et
la fixation d'un second prisme à la seconde surface du film polarisant.

2. Procédé selon la revendication 1, comprenant en outre le traitement thermique du séparateur de faisceau polarisant jusqu'à une température qui ne dépasse pas environ 20°C en dessous de la température de transition vitreuse du matériau polymère.

3. Procédé de fabrication d'un séparateur de faisceau polarisant, le procédé comprenant :
le maintien d'un film polarisant (16) à l'intérieur d'un premier moule, le film polarisant ayant une première surface (18) et une seconde surface (20) ;
l'injection d'un premier matériau polymère dans le premier moule au voisinage de la première surface du film polarisant ;
la solidification du premier matériau polymère pour former un premier prisme ;
l'injection d'un second matériau polymère dans un second moule au voisinage de la seconde surface du film polarisant ; et
la solidification du second matériau polymère pour former un second prisme, le film polarisant étant disposé entre le premier prisme et le second prisme.

4. Procédé selon la revendication 3, comprenant en outre le traitement thermique du séparateur de faisceau polarisant jusqu'à une température qui ne dépasse pas environ 20°C en dessous de la température de transition vitreuse du premier matériau polymère ou de la température de transition vitreuse du second matériau polymère.

5. Procédé selon la revendication 1 ou 3, dans lequel le premier prisme comprend au moins un élément mâle disposé sur une surface adjacente au film polarisant et faisant saillie à partir de celle-ci, et dans lequel le second prisme comprend au moins une partie femelle susceptible de recevoir le(s) élément(s) mâle(s).
